# FASCICULE DE BREVET EUROPEEN

(11) **EP 2 876 043 B1**
(45) Date de publication et mention de la délivrance du brevet: **15.06.2016**
(21) Numéro de dépôt: 14193724.3
(22) Date de dépôt: 18.11.2014
(51) Int. Cl.: B64C 1/06, B64C 1/00

(54) **Partie de fuselage pour aéronef en matériau composite comprenant des lâchers de plis à faible pente**
Rumpfteil für Luftfahrzeug aus Verbundmaterial mit Falten mit niedriger Neigung
Aircraft fuselage portion made of composite material including low slope let folds

(30) Priorité: 22.11.2013 FR 1361524
(43) Date de publication de la demande: 27.05.2015
(73) Titulaire: AIRBUS OPERATIONS (SAS), 31060 Toulouse (FR)
(72) Inventeur: Bernadet, Philippe, 31770 COLOMIERS (FR); Delahaye, Romain, 31770 COLOMIERS (FR)
(74) Mandataire: Brevalex

(56) Documents cités:
- US-A1- 2008 292 849

## Description

### DOMAINE TECHNIQUE

La présente invention se rapporte au domaine des fuselages en matériau composite pour aéronef.

Elle concerne une partie de fuselage pour aéronef, telle qu'une pointe avant en particulier, dans laquelle les cadres circonférentiels présentent chacun une semelle appliquée de manière continue sur la peau de fuselage. De tels cadres circonférentiels sont couramment dénommés « cadres intégraux ».

L'invention trouve une application particulièrement avantageuse dans le cas d'une pointe avant dépourvue de lisses.

### ÉTAT DE LA TECHNIQUE ANTÉRIEURE

Une difficulté rencontrée dans la fabrication des fuselages d'aéronef réside dans l'opération d'assemblage des cadres circonférentiels à la peau de fuselage, dans le cas où les cadres circonférentiels présentent chacun une semelle en contact avec la peau de fuselage.

Cette opération requiert en effet que soient comblés les divers interstices entre la semelle de chaque cadre circonférentiel et la peau de fuselage, résultant des tolérances de fabrication de ces éléments.

Ces interstices sont d'autant plus grands que la peau de fuselage présente de nombreuses régions d'épaisseurs différentes, correspondant à des niveaux d'efforts à supporter plus ou moins élevés.

Les interstices sont en général comblés au moyen de cales solides ou d'une résine durcissable. L'opération est fastidieuse et coûteuse en temps, en particulier dans le second cas du fait d'un temps de polymérisation qui atteint en général plusieurs heures.

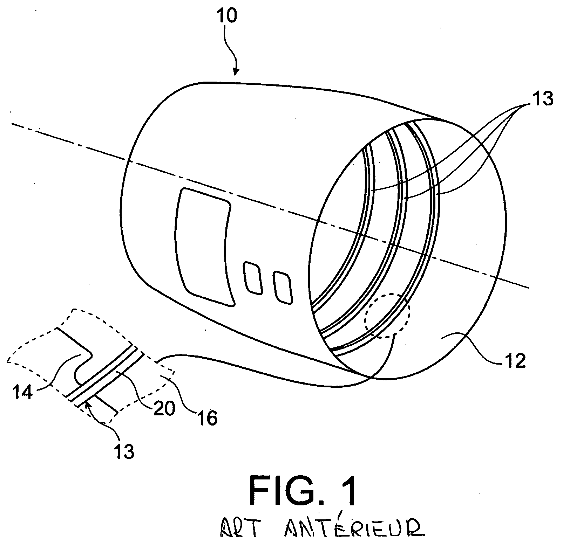

La figure 1 illustre partiellement une pointe avant de fuselage d'aéronef 10 d'un type connu, comprenant une peau de fuselage 12 en matériau composite ainsi que des cadres circonférentiels 13, la peau de fuselage 12 comportant des régions d'épaisseurs différentes, telles qu'une première région 14 de plus grande épaisseur et une deuxième région 16 de plus petite épaisseur. Ces deux régions sont raccordées l'une à l'autre par un lâcher de plis 18.

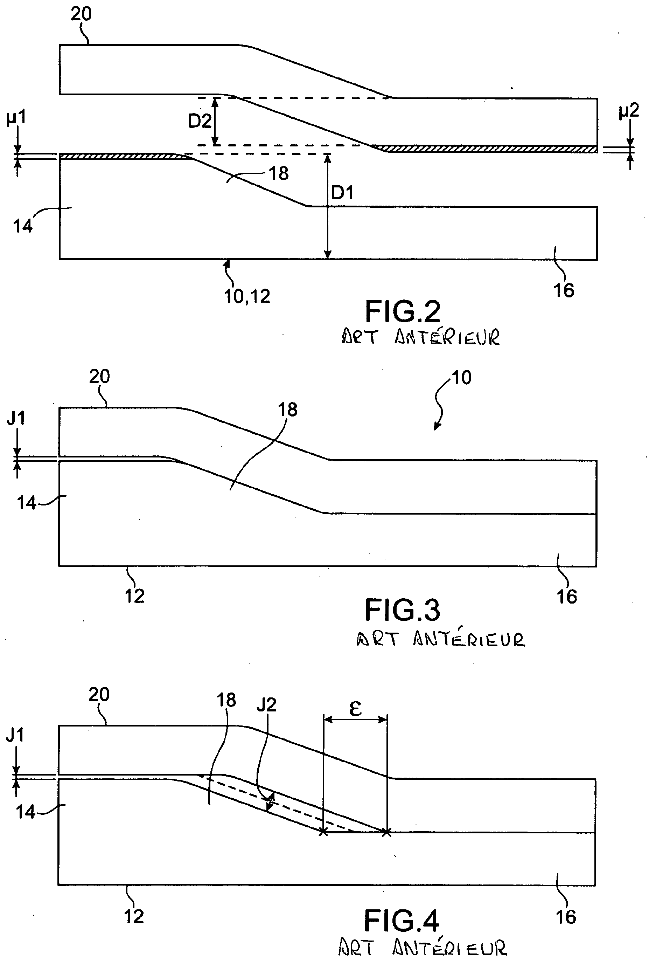

La figure 2 illustre la peau de fuselage 12 en section transversale, et montre en particulier les deux régions 14 et 16 et le lâcher de plis 18, ainsi qu'une portion d'une semelle 20 de forme complémentaire faisant partie d'un cadre circonférentiel 13 et destinée à être appliquée sur la peau de fuselage 12.
La figure 2 illustre les tolérances de fabrication µ1 et µ2 relatives respectivement à l'épaisseur D1 de la peau de fuselage 12 et à l'épaisseur D2 de la semelle 20. Ces tolérances de fabrication sont typiquement égales à 0,2 mm environ.
La figure 3 illustre la peau de fuselage 12 et la semelle 20 après assemblage, dans le cas le pire, où subsiste un jeu J1 correspondant à la somme des tolérances µ1 et µ2, soit dans l'exemple considéré, 0,4 mm.

Toutefois, aux tolérances de fabrication s'ajoute une tolérance ε liée au positionnement de la semelle 20 du cadre circonférentiel par rapport à la peau de fuselage 12 et aux incertitudes relatives à la position du pied du lâcher de plis inhérentes aux procédés de fabrication des peaux en matériaux composites, comme le montre la figure 4.

Cette tolérance de positionnement ε induit un jeu J2 au niveau du lâcher de plis 18, d'autant plus marqué que la pente de ce lâcher de plis est forte.

Dans l'exemple illustré, dans lequel la pente du lâcher de plis 18 est égale à 1/20 et la tolérance de positionnement ε est égale à 12 mm, le jeu J2 atteint ainsi 0,6 mm.

Toutefois, une réduction de la pente du lâcher de plis 18 se révèle peu souhaitable, dans le cadre des parties de fuselage conventionnelles, du fait de l'accroissement de masse important qui découlerait d'une telle réduction de pente. Le document US 2008/0292849 montre une partie de fuselage avec toutes les caractéristiques techniques de préambule de la revendication 1.

### EXPOSÉ DE L'INVENTION

L'invention a notamment pour but d'apporter une solution simple, économique et efficace à ce problème, permettant de rendre plus faciles et plus rapides les opérations d'assemblage des cadres circonférentiels et des peaux de fuselage, notamment en ce qui concerne les pointes avant.

L'invention propose à cet effet une partie de fuselage en matériau composite pour aéronef, comportant une peau de fuselage comprenant au moins deux régions d'épaisseurs constantes différentes, à savoir une première région de plus grande épaisseur, et une deuxième région de plus petite épaisseur, lesdites régions étant séparées l'une de l'autre par un lâcher de plis.

Selon l'invention, ledit lâcher de plis comprend au moins deux parties ayant des pentes différentes orientées chacune selon une direction circonférentielle orthogonale à une direction longitudinale de ladite partie de fuselage, à savoir une première partie ayant une plus forte pente et une deuxième partie ayant une plus faible pente, les première et deuxième parties étant agencées d'un même côté circonférentiel par rapport à la première région.

Les pentes des première et deuxième parties sont ainsi orientées dans le même sens.

L'invention propose ainsi d'utiliser un lâcher de plis en deux parties ou plus, dans lequel la deuxième partie présente une pente relativement faible propice à la réduction du jeu d'assemblage avec la semelle d'un cadre circonférentiel, tandis que la première partie présente une pente relativement forte permettant de limiter la masse de ladite partie de fuselage.

L'invention présente de manière préférentielle l'une ou plusieurs des caractéristiques optionnelles décrites ci-dessous.

Ladite pente de ladite première partie dudit premier lâcher de plis est avantageusement supérieure ou égale à 1/20 tandis que ladite pente de ladite deuxième partie dudit premier lâcher de plis est avantageusement inférieure ou égale à 1/40 et de préférence inférieure ou égale à 1/70.

La partie de fuselage comprend en outre avantageusement un premier cadre circonférentiel s'étendant selon un plan orthogonal à ladite direction longitudinale et comprenant une semelle appliquée sur lesdites régions d'épaisseur constante et sur ladite deuxième partie dudit premier lâcher de plis.

Ladite deuxième partie dudit premier lâcher de plis présente avantageusement une largeur comprise entre 1 fois et 1,5 fois la largeur de ladite semelle dudit premier cadre circonférentiel.

La partie de fuselage comprend en outre avantageusement un deuxième cadre circonférentiel s'étendant selon un plan orthogonal à ladite direction longitudinale et comprenant une semelle appliquée sur lesdites régions d'épaisseur constante et sur une quatrième partie dudit premier lâcher de plis semblable à ladite deuxième partie dudit premier lâcher de plis et séparée de ladite deuxième partie par une troisième partie dudit premier lâcher de plis semblable à ladite première partie de ce dernier.

Ladite peau de fuselage comprend avantageusement une troisième région d'épaisseur constante ayant une épaisseur inférieure à l'épaisseur de ladite deuxième région, ladite troisième région étant raccordée à ladite deuxième région par un deuxième lâcher de plis comprenant au moins deux parties ayant des pentes différentes orientées chacune selon ladite direction circonférentielle, à savoir une première partie ayant une plus forte pente et une deuxième partie ayant une plus faible pente, cette dernière pente étant inférieure à ladite pente de ladite deuxième région dudit premier lâcher de plis, et les première et deuxième parties du deuxième lâcher de plis étant agencées d'un même côté circonférentiel par rapport à la deuxième région.

La partie de fuselage est avantageusement destinée à former une pointe avant d'aéronef.

L'invention concerne également une pointe avant d'aéronef, comprenant une partie de fuselage du type décrit ci-dessus.

L'invention concerne enfin un aéronef, comprenant une partie de fuselage du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une vue schématique partielle en perspective d'une partie de fuselage d'un type connu, destinée à former une partie de la pointe avant d'un aéronef;
- les figures 2 à 4, déjà décrites, sont des vues schématiques partielles en section transversale de la partie de fuselage de la figure 1 ;

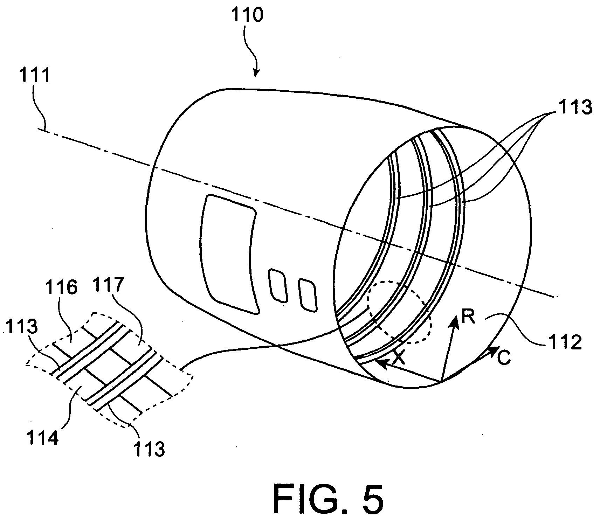

- la figure 5 est une vue schématique partielle en perspective d'une partie de fuselage selon un mode de réalisation préféré de l'invention, destinée à former la pointe avant d'un aéronef;

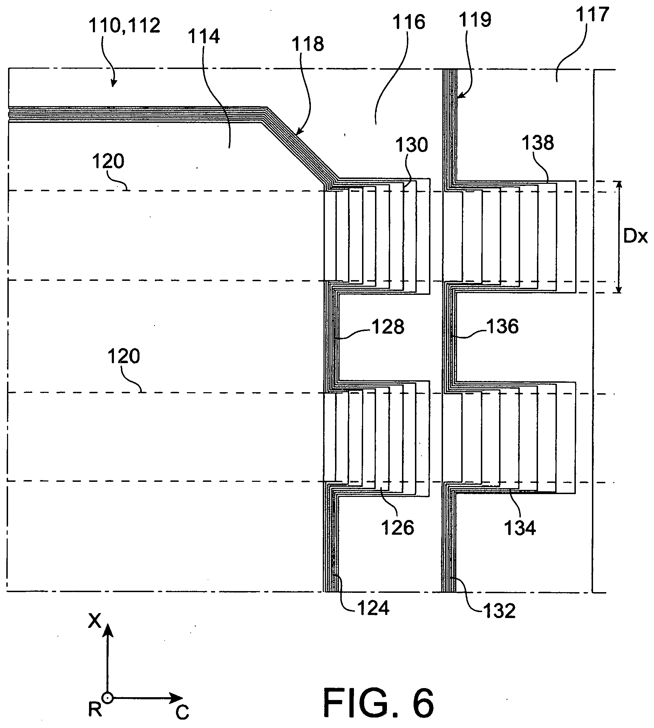

- la figure 6 est une vue schématique partielle de la peau de fuselage de la partie de fuselage de la figure 5, vue selon la direction radiale, depuis l'intérieur de ladite partie de fuselage ;

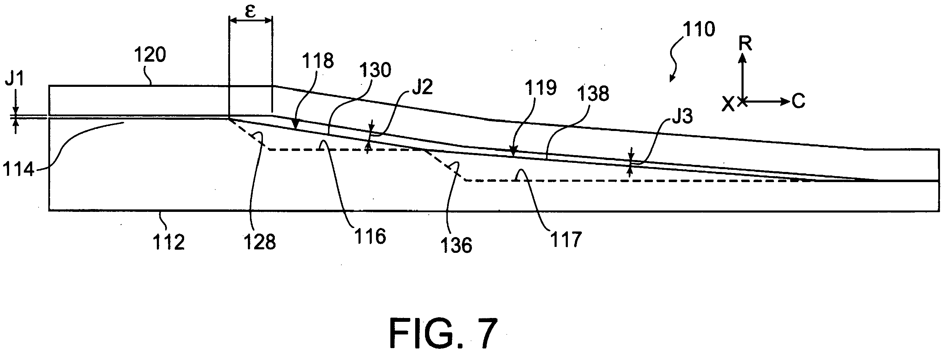

- la figure 7 est une vue schématique partielle en section transversale de la partie de fuselage de la figure 5;

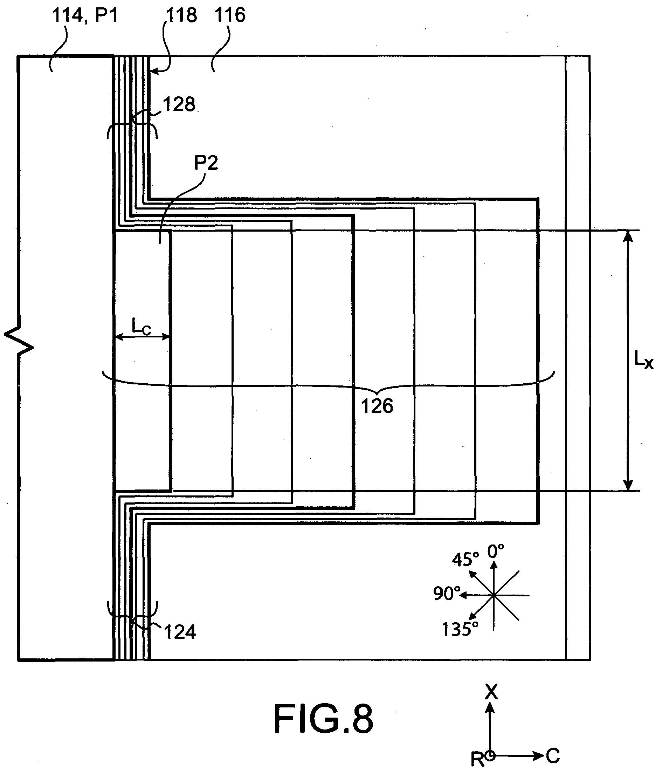

- les figures 8 à 11 sont des vue semblables à la figure 6, mais à plus grande échelle, illustrant différentes configurations de plis d'un lâcher de plis de peau de fuselage de la figure 6.

Dans l'ensemble de ces figures, des références identiques peuvent désigner des éléments identiques ou analogues.

### EXPOSÉ DÉTAILLÉ D'UN MODE DE RÉALISATION PRÉFÉRÉ

La figure 5 illustre une partie de fuselage 110 destinée à former une pointe avant de fuselage d'aéronef. Cette partie de fuselage 110 s'étend suivant un axe 111 définissant une direction longitudinale X de la partie de fuselage. Des directions radiale R et circonférentielle C sont également définies par référence à l'axe 111.

Cette partie de fuselage 110 comprend une peau de fuselage 112 en matériau composite ainsi que des cadres circonférentiels 113 destinés à rigidifier la peau de fuselage 112, d'une manière connue en soi.

Dans l'exemple illustré, la partie de fuselage 110 est dépourvue de lisses, c'est-à-dire de raidisseurs longitudinaux. La rigidité de la peau de fuselage 112 est ainsi procurée par l'épaisseur de cette peau, d'une manière connue de l'homme du métier.

Comme dans l'exemple de la figure 1 décrit ci-dessus, la peau de fuselage 112 comporte des régions d'épaisseurs différentes, adaptées aux variations locales du niveau d'effort que la peau de fuselage 112 doit supporter.

La figure 6 représente une portion de la peau de fuselage 112 vue selon la direction radiale R, depuis l'intérieur de la partie de fuselage 110. Cette figure laisse apercevoir trois régions d'épaisseurs différentes, à savoir une première région 114 de plus grande épaisseur, une deuxième région 116 de plus petite épaisseur, et une troisième région 117 d'épaisseur encore plus faible.

La première région 114 est raccordée à la deuxième région 116 par un premier lâcher de plis 118, tandis que la deuxième région 116 est raccordée à la troisième région 117 par un deuxième lâcher de plis 119.

La figure 6 laisse également apercevoir en trait interrompu les positions respectives de deux semelles 120 appartenant respectivement à deux cadres circonférentiels 113 consécutifs.

Selon une particularité de la présente invention, le premier lâcher de plis 118 comporte plusieurs parties ayant des pentes différentes orientées selon la direction circonférentielle C, dans la même direction autour de l'axe 111, par exemple dans la direction anti-horaire lorsque la partie de fuselage 110 est vue depuis l'arrière, c'est à dire lorsqu'elle est vue de la droite vers la gauche sur la figure 5.

Ainsi, la figure 6 laisse apercevoir une première partie 124 ayant une pente égale à 1/20 par exemple et une deuxième partie 126 ayant une pente égale à 1/70 par exemple. Les pentes respectives des parties 124 et 126 du premier lâcher de plis 118 sont orientées dans le même sens, en l'occurrence de la gauche vers la droite sur la figure 6. Ces deux parties 124 et 126 du premier lâcher de plis 118 sont sensiblement adjacentes selon la direction longitudinale X. Autrement dit, ces deux parties 124 et 126 sont séparées l'une de l'autre par une limite s'étendant selon la direction circonférentielle C.

La figure 6 permet en outre d'apercevoir deux autres parties du lâcher de plis 118, à savoir une troisième partie 128 ayant une pente égale à 1/20 par exemple, et une quatrième partie 130 ayant une pente égale à 1/70 par exemple.

Comme le montre la figure 6, le deuxième lâcher de plis 119 est semblable au premier lâcher de plis 118, et présente donc une première partie 132, une deuxième partie 134, une troisième partie 136 et une quatrième partie 138.

Toutefois, dans l'exemple illustré, la pente des deuxième et quatrième parties 134, 138 est égale à 1/100 environ, et est donc inférieure à la pente des deuxième et quatrième parties 126, 130 du premier lâcher de plis 118.

Comme cela apparaît sur la figure 6, les semelles 120 respectives des deux cadres circonférentiels 113 précités sont appliquées respectivement sur les deuxièmes 126, 134 et quatrièmes 130, 138 parties de chacun des deux lâchers de plis 118 et 119. La largeur Dx de chacune de ces parties des lâchers de plis est avantageusement comprise entre 1 fois et 1,5 fois la largeur de la semelle 120 de chaque cadre circonférentiel. La largeur de chaque partie de lâcher de plis s'entend comme étant l'étendue, selon la direction longitudinale X, du pli le plus large de la partie considérée du lâcher de plis.

Comme l'illustre la figure 7, la pente relativement faible de la peau de fuselage 112 et de la semelle 120 de chaque cadre circonférentiel, au niveau du contact entre ces éléments, permet de réduire considérablement le jeu résultant de la tolérance de positionnement ε des cadres circonférentiels.

Ainsi, dans le cas le pire, visible sur la figure 7, avec une tolérance de positionnement ε égale à 12 mm, le jeu J2 au niveau du premier lâcher de plis 118 est égal à 0,2 mm environ, et le jeu J3 au niveau du deuxième lâcher de plis 119 est même réduit à 0,1 mm environ.

En revanche, les premières 124, 132 et troisièmes 128, 136 parties de chacun des lâchers de plis 118, 119 correspondent à des zones de la peau de fuselage 112 situées entre les cadres circonférentiels, dans lesquelles la pente plus importante permet de limiter la masse globale de la partie de fuselage 110.

Les deuxièmes parties 126, 134 et les quatrièmes parties 130, 138 des lâchers de plis 118, 119 peuvent être réalisées concomitamment à la peau de fuselage 112. Dans chacune de ces parties à pente relativement faible, l'orientation des fibres de chaque pli est déterminée en fonction de l'étendue circonférentielle et de l'étendue longitudinale du pli au sein du lâcher de pli considéré, et en fonction d'une longueur minimale de drapage imposée par l'outillage utilisé. De préférence, les lâcher de plis comprennent une alternance de plis comprenant des fibres orientées à 90 degrés et de plis comprenant des fibres orientées à zéro degré.

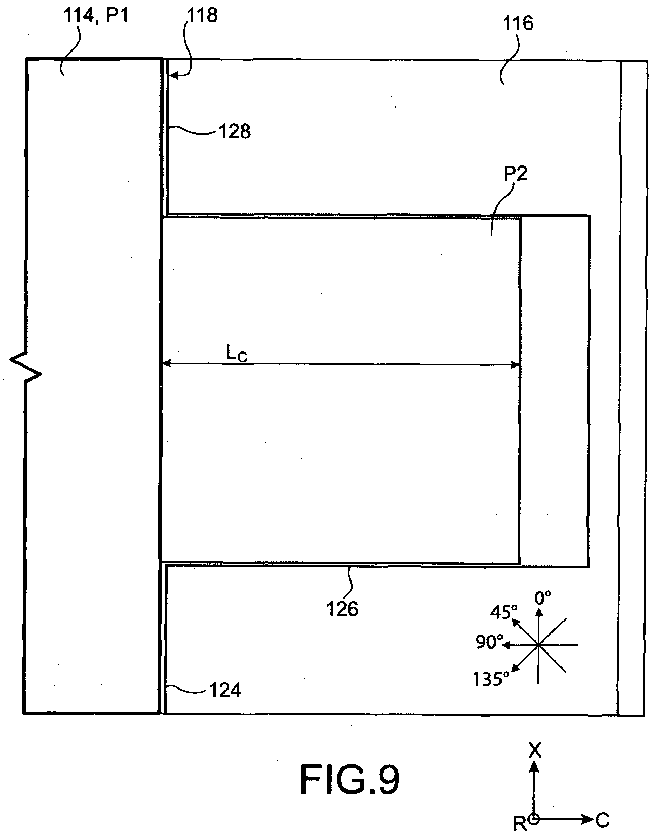

En particulier, pour un pli P1 de la région 114 à prolonger ayant des fibres orientées à 45 degrés ou à 135 degrés (figure 8), lorsque le pli additionnel P2 du lâcher de plis 118 présente une étendue circonférentielle Lc inférieure à la longueur minimale de drapage et une étendue longitudinale Lx supérieure à la longueur minimale de drapage, les fibres de ce pli additionnel P2 sont de préférence orientées à zéro degré. En revanche, lorsque le pli additionnel P2 du lâcher de plis 118 présente une étendue circonférentielle Lc supérieure à la longueur minimale de drapage (figure 9), les fibres de ce pli additionnel P2 sont de préférence orientées à 90 degrés.

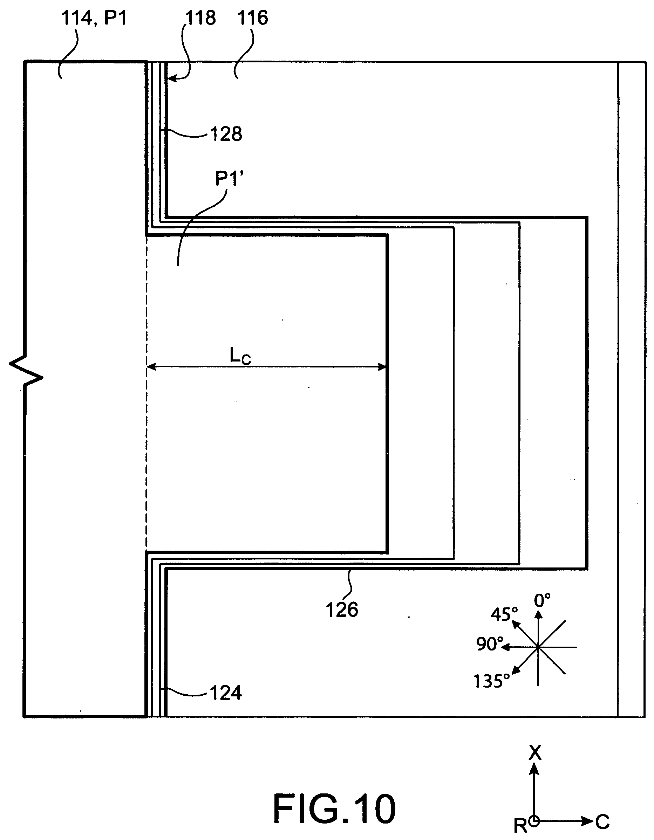

Pour un pli P1 de la région 114 à prolonger ayant des fibres orientées à 90 degrés (figure 10), lorsque le pli additionnel P1' du lâcher de plis 118 présente une étendue circonférentielle Lc supérieure à la longueur minimale de drapage, les fibres de ce pli additionnel P1' sont de préférence orientées à 90 degrés. Le pli additionnel P1' peut alors être formé intégralement avec le pli P1 de la région 114.

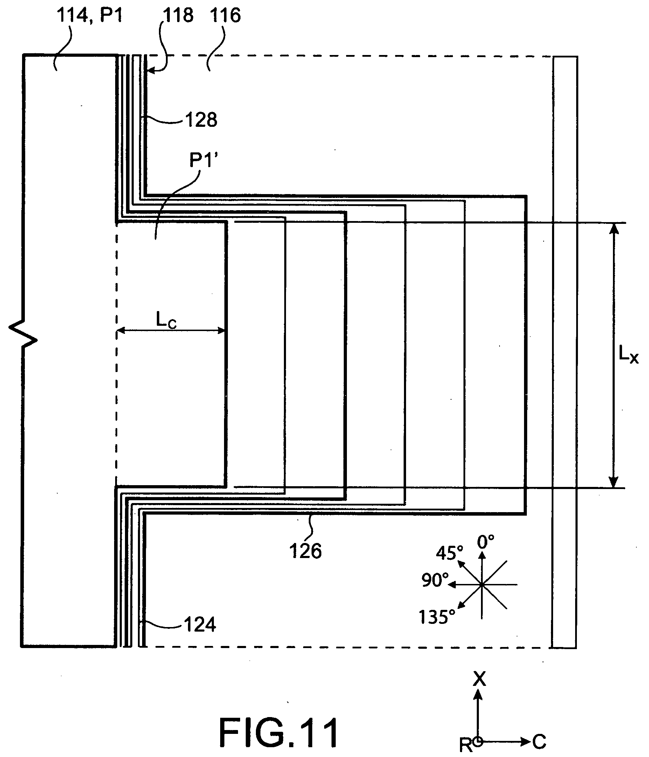

De manière analogue, pour un pli P1 de la région 114 à prolonger ayant des fibres orientées à zéro degré (figure 11), lorsque le pli additionnel P1' du lâcher de plis 118 présente une étendue longitudinale Lx supérieure à la longueur minimale de drapage, les fibres de ce pli additionnel P1' sont de préférence orientées à zéro degré. Le pli additionnel P1' peut alors être formé intégralement avec le pli P1 de la région 114.

D'une manière générale, l'invention permet donc de réduire les jeux induits par les tolérances de fabrication, au niveau du contact entre la semelle de chaque cadre circonférentiel et la peau de fuselage dans une partie de fuselage pour aéronef, tout en limitant la masse de la partie de fuselage.

Il est à noter que dans l'exemple illustré, l'absence de lisses permet d'obtenir une peau de fuselage 112 totalement dépourvue de marches au droit de chacun des cadres circonférentiels 113.

## Revendications

1. Partie de fuselage (110) en matériau composite pour aéronef, comportant une peau de fuselage (112) comprenant au moins deux régions d'épaisseur constante ayant des épaisseurs différentes, à savoir une première région (114) de plus grande épaisseur, et une deuxième région (116) de plus petite épaisseur, lesdites régions étant raccordées l'une à l'autre par un premier lâcher de plis (118),
ladite partie de fuselage étant **caractérisée en ce que** ledit premier lâcher de plis comprend au moins deux parties ayant des pentes différentes orientées chacune selon une direction circonférentielle (C) orthogonale à une direction longitudinale (X) de ladite partie de fuselage, à savoir une première partie (124) ayant une plus forte pente et une deuxième partie (126) ayant une plus faible pente, les première et deuxième parties (124, 126) étant agencées d'un même côté circonférentiel par rapport à la première région (114).

2. Partie de fuselage selon la revendication 1, dans laquelle ladite pente de ladite première partie (124) dudit premier lâcher de plis (118) est supérieure ou égale à 1/20 tandis que ladite pente de ladite deuxième partie (126) dudit premier lâcher de plis est inférieure ou égale à 1/40.

3. Partie de fuselage selon la revendication 2, dans laquelle ladite pente de ladite deuxième partie (126) dudit premier lâcher de plis (118) est inférieure ou égale à 1/70.

4. Partie de fuselage selon l'une quelconque des revendications 1 à 3, comprenant en outre un premier cadre circonférentiel (113) s'étendant selon un plan orthogonal à ladite direction longitudinale (X) et comprenant une semelle (120) appliquée sur lesdites régions d'épaisseur constante (114, 116) et sur ladite deuxième partie (126) dudit premier lâcher de plis (118).

5. Partie de fuselage selon la revendication 4, dans laquelle ladite deuxième partie (126) dudit premier lâcher de plis (118) présente une largeur (Dx) comprise entre 1 fois et 1,5 fois la largeur de ladite semelle (120) dudit premier cadre circonférentiel.

6. Partie de fuselage selon la revendication 4 ou 5, comprenant en outre un deuxième cadre circonférentiel (113) s'étendant selon un plan orthogonal à ladite direction longitudinale (X) et comprenant une semelle (120) appliquée sur lesdites régions d'épaisseur constante (114,116) et sur une quatrième partie (130) dudit premier lâcher de plis (118) semblable à ladite deuxième partie (126) dudit premier lâcher de plis et séparée de ladite deuxième partie (126) par une troisième partie (128) dudit premier lâcher de plis semblable à ladite première partie (124) de ce dernier.

7. Partie de fuselage selon l'une quelconque des revendications 1 à 6, dans laquelle ladite peau de fuselage (112) comprend une troisième région (117) d'épaisseur constante ayant une épaisseur inférieure à l'épaisseur de ladite deuxième région (116), ladite troisième région (117) étant raccordée à ladite deuxième région (116) par un deuxième lâcher de plis (119) comprenant au moins deux parties ayant des pentes différentes orientées chacune selon ladite direction circonférentielle (C), à savoir une première partie (132) ayant une plus forte pente et une deuxième partie (134) ayant une plus faible pente, cette dernière pente étant inférieure à ladite pente de ladite deuxième région (126) dudit premier lâcher de plis. (118), et les première et deuxième parties (132, 134) du deuxième lâcher de plis (119) étant agencées d'un même côté circonférentiel par rapport à la deuxième région (116).

8. Partie de fuselage selon l'une quelconque des revendications 1 à 7, destinée à former une pointe avant d'aéronef.

9. Pointe avant d'aéronef, comprenant une partie de fuselage selon l'une quelconque des revendications précédentes.

10. Aéronef, comprenant une partie de fuselage selon l'une quelconque des revendications 1 à 8.

## Patentansprüche

1. Ein Rumpfabschnitt (110) aus Verbundmaterial für ein Luftfahrzeug, umfassend eine Rumpfhaut (112), die mindestens zwei Bereiche mit konstanter Dicke umfasst, die unterschiedliche Dicken aufweisen, insbesondere einen ersten Bereich (114) mit größerer Dicke und einen zweiten Bereich (116) mit geringerer Dicke, wobei die besagten Bereiche mit einer ersten Stufenfalte (118) miteinander verbunden sind,
besagter Rumpfabschnitt ist **dadurch gekennzeichnet, dass** besagte erste Stufenfalte mindestens zwei Abschnitte umfasst, die unterschiedliche Neigungen haben, von denen jeder in einer Umfangsrichtung (C) orthogonal zu einer Längsrichtung (X) des besagten Rumpfabschnitts ausgerichtet ist, umfassend einen ersten Abschnitt (124), der eine größere Neigung aufweist, und einen zweiten Abschnitt (126), der eine geringere Neigung aufweist, die ersten und die zweiten Abschnitte (124, 126) sind in Bezug auf den ersten Bereich (114) an ein und derselben Umfangsseite angeordnet.

2. Der Rumpfabschnitt gemäß Anspruch 1, wobei besagte Neigung des besagten ersten Abschnitts (124) der besagten ersten Stufenfalte (118) größer oder gleich 1/20 ist und wobei besagte Neigung des besagten zweiten Abschnitts (126) der besagten ersten Stufenfalte geringer oder gleich 1/40 ist.

3. Der Rumpfabschnitt gemäß Anspruch 2, wobei besagte Neigung des besagten zweiten Abschnitts (126) der besagten ersten Stufenfalte (118) geringer oder gleich 1/70 ist.

4. Der Rumpfabschnitt gemäß einem der Ansprüche 1 bis 3, ferner mit einem ersten Umfangsrahmen (113), der sich in einer Ebene orthogonal zu besagter Längsrichtung (X) erstreckt und eine Grundplatte (120) aufweist, die auf den besagten Bereichen mit konstanter Dicke (114,116) und auf besagtem zweiten Abschnitt (126) der besagten ersten Stufenfalte (118) aufgebracht ist.

5. Der Rumpfabschnitt gemäß Anspruch 4, wobei besagter zweiter Abschnitt (126) der besagten ersten Stufenfalte (118) eine Breite (Dx) zwischen ein- bis eineinhalbmal einer Breite besagter Grundplatte (120) des besagten ersten Umfangsrahmens aufweist.

6. Der Rumpfabschnitt gemäß Anspruch 4 oder 5, ferner mit einem zweiten Umfangsrahmen (113), der sich in einer Ebene orthogonal zu besagter Längsrichtung (X) erstreckt und eine Grundplatte (120) aufweist, die auf die besagten Bereiche mit konstanter Dicke (114,116) und auf einen vierten Abschnitt (130) der besagten ersten Stufenfalte (118), gleich wie bei besagtem zweiten Abschnitt (126) der besagten ersten Stufenfalte, aufgebracht ist und von dem besagten zweiten Abschnitt (126) durch einen dritten Abschnitt (128) der besagten ersten Stufenfalte, gleich dem besagten ersten Abschnitt (124), getrennt ist.

7. Der Rumpfabschnitt gemäß einem der Ansprüche 1 bis 6,
wobei die besagte Rumpfhaut (112) einen dritten Bereich (117) mit konstanter Dicke aufweist, der eine geringere Dicke hat als der besagte zweite Bereich (116),
wobei der besagte dritte Bereich (117) mit dem besagten zweiten Bereich (116) durch eine zweite Stufenfalte (119) verbunden ist, die mindestens zwei Abschnitte mit unterschiedlichen Neigungen aufweist, von denen jeder in besagter Umfangsrichtung (C) ausgerichtet ist, umfassend einen ersten Abschnitt (132) mit einer größeren Neigung und einen zweiten Abschnitt (134) mit einer geringeren Neigung,
wobei die letztere Neigung geringer ist als die besagte Neigung des besagten zweiten Bereichs (126) der besagten ersten Stufenfalte (118) und die ersten und die zweiten Abschnitte (132,134) der zweiten Stufenfalte (119) an ein und derselben Umfangsseite, in Bezug auf den zweiten Bereich (116), angeordnet sind.

8. Der Rumpfabschnitt gemäß einem der Ansprüche 1 bis 7, wobei dieser dazu bestimmt ist, einen vorderen Teil eines Luftfahrzeugs zu bilden.

9. Ein vorderer Teil eines Luftfahrzeugs, mit einem Rumpfabschnitt gemäß einem der vorangegangenen Ansprüche.

10. Ein Luftfahrzeug, mit einem Rumpfabschnitt gemäß einem der Ansprüche 1 bis 8.

## Claims

1. Fuselage portion (110) in composite material for an aircraft, comprising a fuselage skin (112) comprising at least two regions of constant thickness having different thicknesses, namely a first region (114) of greater thickness, and a second region (116) of lesser thickness, said regions being connected to one another by a first ply drop-off (118),
said fuselage portion being **characterized in that** said first ply drop-off comprises at least two portions having different slopes each oriented in a circumferential direction (C) orthogonal to a longitudinal direction (X) of said fuselage portion, namely a first portion (124) having a greater slope and a second portion (126) having a lesser slope, the first and second portions (124, 126) being arranged on one and the same circumferential side relative to the first region (114).

2. Fuselage portion according to Claim 1, in which said slope of said first portion (124) of said first ply drop-off (118) is greater than or equal to 1/20 whereas said slope of said second portion (126) of said first ply drop-off is less than or equal to 1/40.

3. Fuselage portion according to Claim 2, in which said slope of said second portion (126) of said first ply drop-off (118) is less than or equal to 1/70.

4. Fuselage portion according to any one of Claims 1 to 3, further comprising a first circumferential frame (113) extending in a plane orthogonal to said longitudinal direction (X) and comprising a soleplate (120) applied to said regions of constant thickness (114, 116) and to said second portion (126) of said first ply drop-off (118).

5. Fuselage portion according to Claim 4, in which said second portion (126) of said first ply drop-off (118) has a width (Dx) between 1 times and 1.5 times the width of said soleplate (120) of said first circumferential frame.

6. Fuselage portion according to Claim 4 or 5, further comprising a second circumferential frame (113) extending in a plane orthogonal to said longitudinal direction (X) and comprising a soleplate (120) applied to said regions of constant thickness (114,116) and to a fourth portion (130) of said first ply drop-off (118) similar to said second portion (126) of said first ply drop-off and separated from said second portion (126) by a third portion (128) of said first ply drop-off similar to said first portion (124) thereof.

7. Fuselage portion according to any one of Claims 1 to 6, in which said fuselage skin (112) comprises a third region (117) of constant thickness having a thickness less than the thickness of said second region (116), said third region (117) being connected to said second region (116) by a second ply drop-off (119) comprising at least two portions having different slopes each oriented in said circumferential direction (C), namely a first portion (132) having a greater slope and a second portion (134) having a lesser slope, the latter slope being less than said slope of said second region (126) of said first ply drop-off (118), and the first and second portions (132, 134) of the second ply drop-off (119) being arranged on one and the same circumferential side relative to the second region (116).

8. Fuselage portion according to any one of Claims 1 to 7, intended to form a forward section of an aircraft.

9. Forward section of an aircraft, comprising a fuselage portion according to any one of the preceding claims.

10. Aircraft, comprising a fuselage portion according to any one of claims 1 to 8.
